# EUROPEAN PATENT APPLICATION

(11) **EP 0 654 428 A1**
(43) Date of publication of application: **24.05.1995**
(21) Application number: 94308541.5
(22) Date of filing: 18.11.1994
(51) Int. Cl.: B65G 23/30, B65G 17/00

(54) **Conveying apparatus and packaging apparatus**

(30) Priority: 23.11.1993 GB 9324086
(71) Applicant: APV PLC, London SW1W 0JR (GB)
(72) Inventor: Warrenburg, William Lee, Austin, Texas 78733 (US)
(74) Representative: Lomas, Geoffrey Michael

(57) **Abstract**

A conveying apparatus (4) has a capture region (6) where the sticks (2) of ice-cream bars (1) are raised from their horizontal positions on supply plates (5) into vertically oriented positions and are captured by grippers (7).

In a release region (10), the sticks (2) are released to fall lightly onto the strips of 8-lane wrapping machine (11).

The grippers (7) are carried by pairs of bars (8,9) extending transversely to the path of a conveyor carrier chain (12).

With the gripper bars (8,9) in an adjacent condition, 16 grippers are equally spaced from one another, and are alternately carried by the two different bars (8,9)

First, the bars (8,9) are urged transversely apart in the longitudinal direction of the carrier chain (12) and finally displaced longitudinally with respect to each other so that the two sets of grippers (7) are in register with each other and that the original 16 lines of ice-cream bars (2) are halved.

## Description

This invention relates to conveying apparatus for receiving a plurality of input lines of articles and for rearranging the articles into a lesser number of output lines of articles. The invention also relates to a packaging apparatus comprising the combination of the conveying apparatus with a wrapping apparatus for receiving the output lines of articles, the wrapping apparatus being adapted to produce individually wrapped articles.

It is common practice for food product articles, such as frozen confectionery, to be produced on a continuous or semi-continuous production machine in a series of parallel lines, for example there may be 16 lines of articles issuing from an oven or from a freezer. Multi-line wrapping machines having such a large number of lines are known but they cannot usually incorporate rotary sealing means since the bulk of rotary sealing heads is too great. Non-rotatable sealing heads could be employed but there are considerable disadvantages associated with the use of such heads.

There is therefore a general need for a conveying apparatus which can rearrange lines of articles into a lesser number of lines.

A particular need arises in the handling of stick-mounted confectionery, ie lollies and ice cream bars on sticks.

The term 'stick' is used herein to cover any elongate carrier or handle for mounting confectionery, and it should be appreciated that a stick need not be made of wood.

Proposals have been made for handling ice-cream bars on sticks for reducing the number of lines of bars, but existing proposals involve the use of reciprocating plates which push on the bars to control the repositioning of the bars. Since frozen ice-cream bars are often coated with a relatively delicate outer coating, of chocolate for example, the use of such plates engaging directly with the ice-cream bars is undesirable.

According to one aspect of the present invention, a conveying apparatus is arranged to reposition articles whilst the articles are held by a plurality of gripping means, the gripping means being rearranged in relative position so as to reduce the number of lines of products.

In a preferred embodiment an elongate gripper assembly comprises parallel first and second elongate gripper carriers, the first gripper carrier carrying a first set of grippers longitudinally spaced-apart along the first gripper carrier, and the second gripper carrier similarly carrying a second set of longitudinally spaced-apart grippers, the spacing of the grippers of the first set corresponding to the spacing of the grippers of the second set, and the arrangement being such that the first and second gripper carriers are relatively movable from an out-of-phase adjacent condition to an in-phase separated condition, the gripper carriers being adjacent to each other in said adjacent condition with the gripper means of the first set alternating out-of-phase longitudinally with the gripper means of the second set and being substantially in line therewith, whereas in the separated condition of the gripper carriers the first set of gripper means are substantially longitudinally in register (in-phase) with the second set of gripper means but with the first and second sets displaced from each other in a direction transverse to the longitudinal direction of the gripper carrier.

Thus, the gripper assembly, in effect, splits a single line of gripper means into two elongate sets which are then moved apart and shifted in phase by a half-cycle.

Such a gripper assembly when arranged to extend transversely of a plurality of input lines of articles, ie such that the aforementioned longitudinal direction of said gripper assembly extends in the transverse direction of the input lines, can be arranged to halve the number of lines of articles.

In order to urge the gripper carrier from said adjacent condition to said separated condition, and vice versa, the first and second gripper carriers are preferably arranged for movement apart and adjacent to each other, in the direction transverse to the longitudinal direction of the gripper carrier, by the contraction and extension of a carrier chain, adjacent links of the carrier chain which respectively carry the first and second gripper carriers being arranged to concertina together at times and to open out at other times.

The carrier chain preferably carries a series of pairs of such carrier assemblies, and the carrier chain is preferably arranged to execute a loop so as to extend from an article capture region to an article release region, the drive means for the carrier chain being arranged such that the carrier chain links are concertinaed together in the article capture region, such that pairs of first and second gripper carriers are in their adjacent condition during capture of the articles by the associated grippers in said article capture region, and such that the carrier chain links are opened out in the article release region, such that the pairs of gripper carriers are in their separated condition during release of the articles by the associated grippers in the article release region.

The drive means for the carrier chain preferably comprises a first, intermittent drive means which is arranged intermittently to drive the carrier chain through the article capture region, and a second, continuous drive means arranged continuously to drive the carrier chain through the article release region.

The use of such first and second drive means has the important advantage of enabling article capture by the grippers to be executed whilst the grippers are substantially stationary relative to the machine frame, for picking up substantially stationary groups of articles, whereas the continuously running carrier chain in the article release region enables the articles to be released onto continuously moving wrapping lines.

The changing degree of opening-out of the concertinaed carrier chain in the intermediate region between the capture region and the release region accommodates the periods during which the carrier chain is momentarily stopped in the capture region but is still running in the release region.

When the conveying apparatus is to be used with stick-mounted confectionery which are supplied to the onveying apparatus in a substantially horizontal orientation, the apparatus preferably comprises a pick-up assembly associated with the product capture region, the pick-up assembly comprising a plurality of pick-up devices adapted to be rotated down to grip a stick of a substantially horizontal article, and then to lift the stick whilst rotating the stick to a substantially vertical orientation for presentation to one of said grippers to capture the stick.

An array of pick-up devices can be mounted on a servo-controlled mount to advance in synchronism with a plate on which an array of articles is supplied to the conveying apparatus, downward pivoting of the pick-up devices being arranged to take place preferably during the advancement. The plate and mount are then preferably arrested whilst the grippers capture the sticks.

A conveying apparatus in accordance with the invention will now be described, by way of example only, with reference to the accompanying drawings, in which:
Figures 1, 2 and 3 are schematic side-elevations of a conveying apparatus showing sequential steps in the process of transferring 16 lines of ice-cream bars on sticks from a supply plate to wrapping material of an 8-lane wrapping machine,

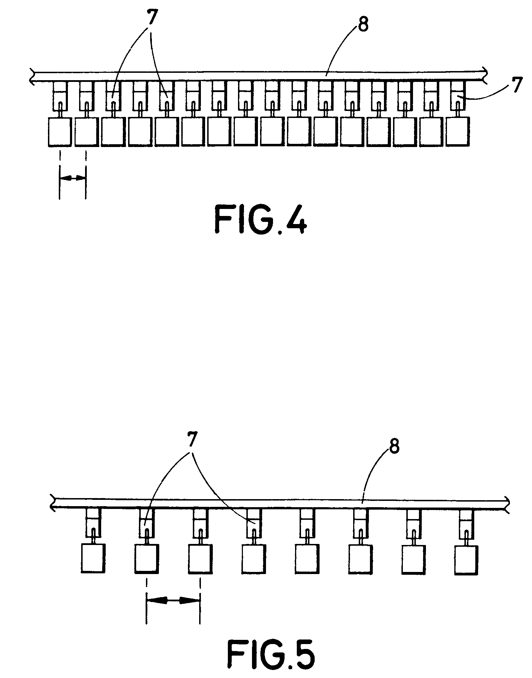

Figure 4 is a local section on the line 4-4 of Figure 3 showing a transverse line of grippers supported by an associated pair of gripper bars and holding 16 ice-cream bars on sticks,
Figure 5 is a local section on the line 5-5 of Figure 3 showing how the successive grippers have been brought into 8 lines ready for depositing the ice-cream bars onto the 8 strips of wrapping material,
Figure 6 is a schematic side view of three pivoted pick-up devices, shown in full outline holding sticks vertically, and in discontinuous outline in a retracted position to allow the ice-cream bars to be lifted vertically having been captured by the grippers,
Figure 7 is a plan view of a supply plate supporting an array of 12 ice-cream bars lying with their sticks horizontal,
Figures 8, 9 and 10 are plan views of an associated pair of gripper bars and showing in sequence the relative movements of the gripper bars in proceeding from an out-of-phase adjacent condition in Figure 8 to an in-phase, separated condition in figure 10.

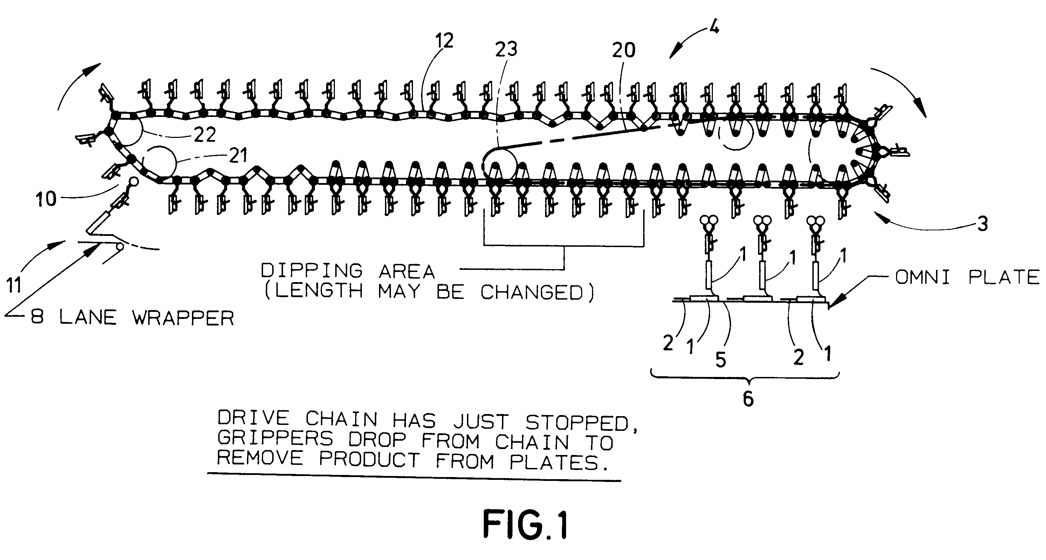

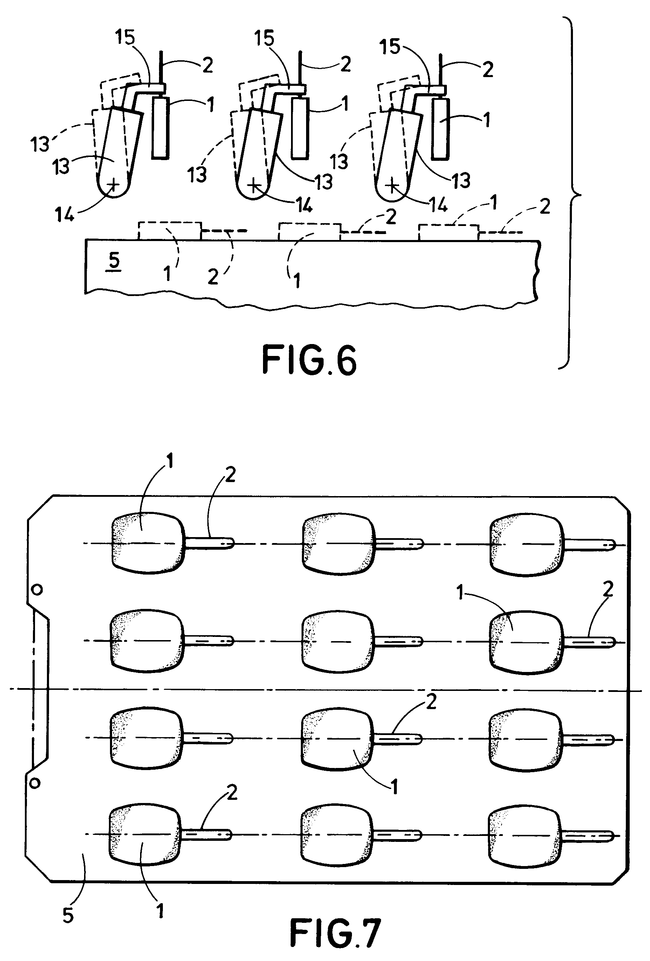

Referring to Figure 1, ice-cream bars 1 on sticks 2 are supplied to the input end 3 of a conveying assembly 4 on discrete supply plates 5, one of which is shown in Figure 7 supporting an array of 12 bars 1. The particular OMNI machine supplying the bars 1 is, in this case, set up to produce 16 lines, that is four side-by-side plates 5 are presented to the conveying assembly 4.

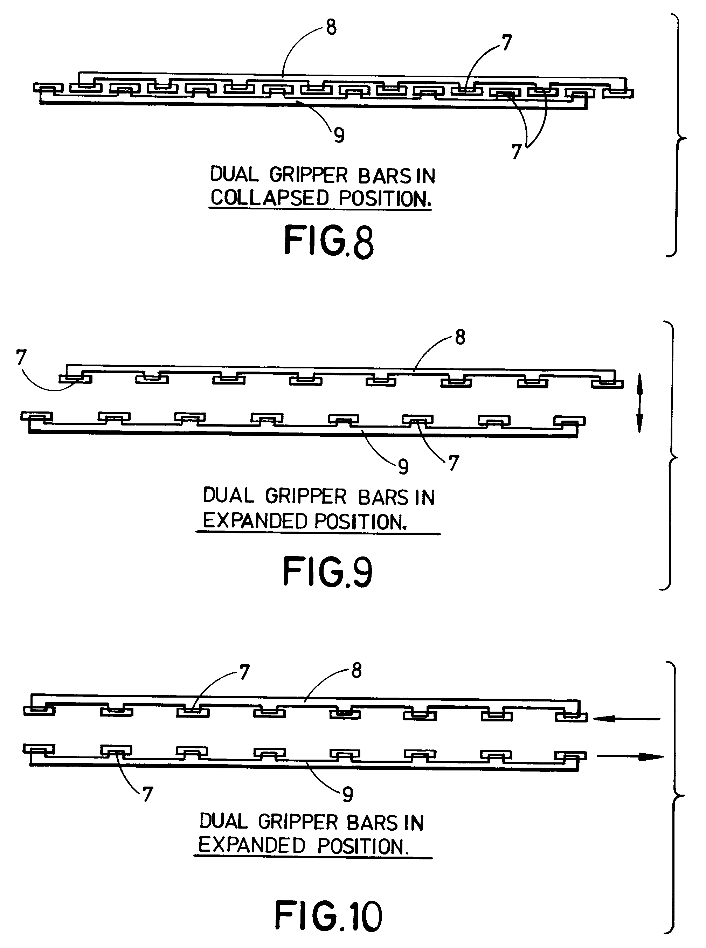

The conveying assembly 4 has a capture region 6 in which region the sticks are captured by gripper means 7 carried by pairs of elongate gripper carriers in the form of bars 8, 9 (Figures 8 to 10) extending transversely of the path of a carrier chain 12. In a release region 10, at the left-hand end of Figure 1, the ice-cream bars are released by the grippers to fall slightly onto the wrapping strips of an 8-lane (in this case) wrapping machine 11 which is provided with rotary sealing heads, not shown, for sealing the tube of wrapping material that is formed around each line of bars, the wrapping material tube being sealed longitudinally and transversely to create a sealed packet around each individual ice-cream bar. The details of such sealing machines are known to the packaging engineer and accordingly need not be further described herein.

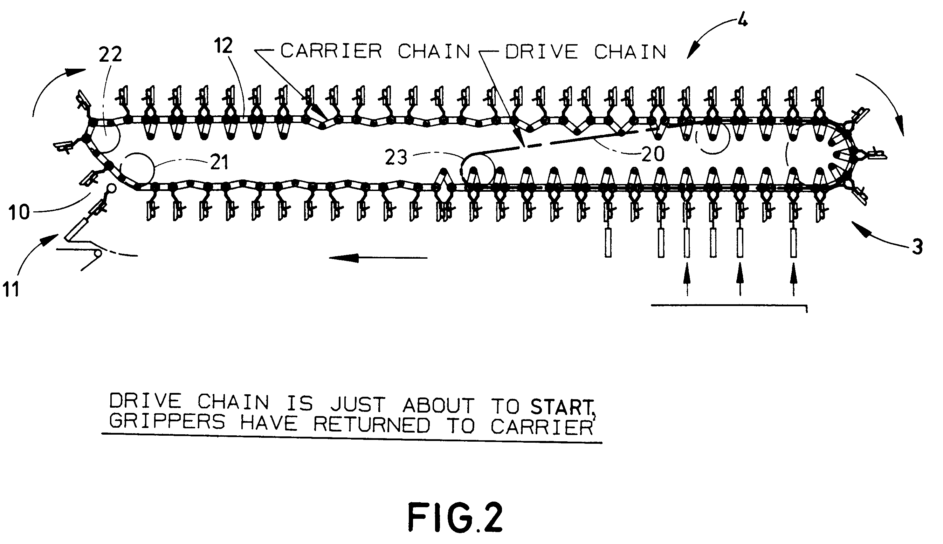

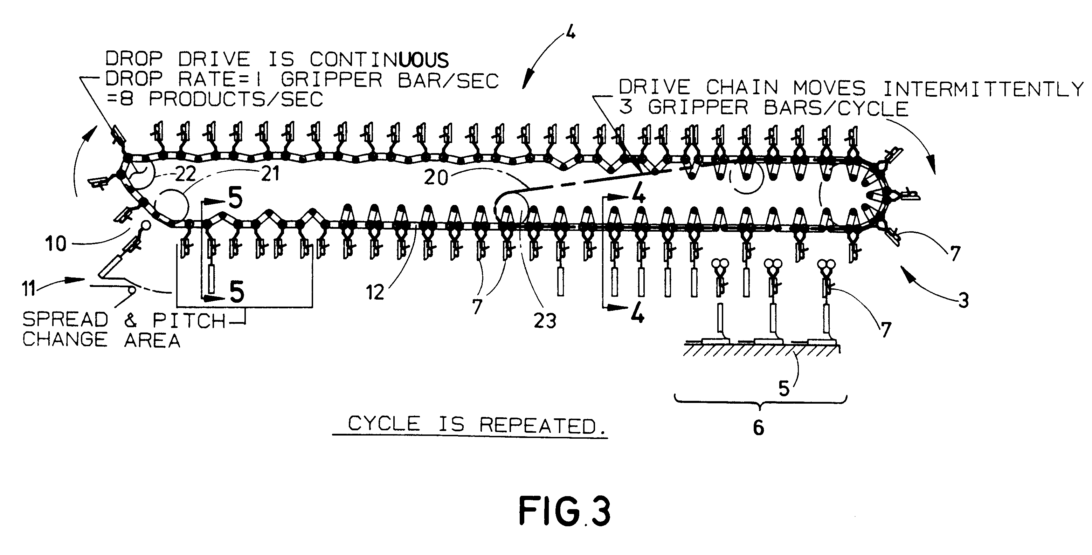

In order to raise the ice-cream bars from their horizontal positions on plate 5 such that the sticks are oriented vertically for capture by the grippers, a servo-controlled pick-up assembly is provided beneath the input end 3 of the conveying assembly 4. For convenience, the pick-up assembly has not been shown in Figures 1 to 3, but three of the pivoted pick-up devices 13 of the pick-up assembly are shown in Figure 6, which is a schematic side-elevation, looking in the direction transverse to the direction of travel of the carrier chain 12.

The pick-up devices 13 are respectively pivotally mounted at 14 on a horizontally-reciprocable pick-up carriage, not shown, the carriage being mounted for servo-controlled reciprocation in the longitudinal direction of the overlying carrier chain 12. The pick-up devices 13 each comprise cranked pick-up jaws 15 adapted to releasably grip a stick 2. The servo control of the pick-up carriage is arranged to synchronise the forward movement of the carriage to the forward movement of the plate 5 as a loaded plate 5 is moved under the conveying assembly 4, and the pick-up devices 13 are pivoted in a clockwise direction in Figure 6 to bring the open pick-up jaws 15 to engage with the respective horizontal sticks 2. There are three transverse lines of pick-up devices 13, with 16 devices in each line, and these are rotated simultaneously into the stick-engaging position, in which a tapping means is applied to plate 5 to release the ice-cream bars. The devices 13 are then pivoted, counter-clockwise in Figure 6, to bring all 48 sticks to a vertical orientation, ready for capture by the grippers 7.

As shown in Figure 8, a line of 16 grippers 7 are carried by a respective pair of adjacent first and second grippers bars, 8 and 9 respectively, to constitute an elongate gripper assembly. With the gripper bars 8, 9 in the adjacent condition of Figure 8 it will be seen that the grippers are equally spaced from one another, and that alternate grippers are carried by the different bars 8, 9 such that the resulting two sets of grippers carried by the respective bars 8, 9 are a half-cycle out-of-phase with one another.

Figure 9 shows the bars 8, 9 urged transversely apart (but in the longitudinal direction of the carrier chain 12) and finally Figure 10 shows the bars 8, 9 displaced longitudinally of each other to bring the bars into an in-phase, separated, condition in which the two sets of grippers 7 carried by the respective bars 8, 9 have been brought into register with each other. It will be appreciated that the bars 8, 9 have been moved longitudinally with respect to each other by an amount corresponding to the spacing of the 16 supply lines.

Mechanism, not shown, is provided in the capture region 6 for lowering certain pairs of gripper bars 8, 9 which are maintained in the capture region in the out-of-phase, adjacent condition of Figure 8 by the chain conveyor 12. In fact, as shown in Figure 1, three alternate gripper assemblies are displaced downwardly to enable the grippers 7 to capture sticks held by the jaws 15 of the pick-up devices 13, which the then move to the broken-line position shown in Figure 6 to allow the gripper assemblies to lift the ice-cream bars clear of the pick-up devices 13.

Thus, in one downward movement of three gripper assemblies in the capture region 6, 48 bars previously supplied on a single supply plate 5 are captured, and on upward movement of the three gripper assemblies those bars are raised clear of the pick-up bars from the next supply plate 5.

The carrier chain 12 is driven firstly by a first drive means in the form of an intermittently driven drive chain 20 which drives the carrier chain 12 through the capture region 6 by the cooperation between complementary chain abutments, and secondly in the vicinity of the release region 10 by a second drive means in the form of continuously driven sprockets 21, 22.

The gripper bars 8, 9 of each gripper assembly are supported by the remote connections of adjacent pairs of links of the carrier chain 12 such that when said adjacent pair of links is concertinaed together the bars 8, 9 are brought to the adjacent condition of Figure 8. Where the path of the drive chain 20 coincides with that of the carrier chain 12, the pairs of adjacent links of the carrier chain 12 are maintained in such a concertinaed condition, as shown in Figures 1 to 3. Hence, in the capture region 6 the drive chain 20 holds the carrier chain links concertinaed, the drive chain 20 extending on its lower run as far as a sprocket 23.

In the region between the capture region 6 and the sprocket 23 the hanging ice-cream bars may if desired, be subjected to a dipping process to provide a coating, the gripper assemblies being suitably lowered to dip the bars.

It should be appreciated that, preferably, the carrier chain 12 was stationary whilst the three gripper assemblies were lowered and then raised in capturing the sticks from the pick-up assembly. Once the sticks have been captured and the three gripper assemblies, shown downward in Figure 1, have been raised back to their normal heights, the drive chain 20 is driven to carry concertinaed carrier chain 12 forwards by three pitches and is then arrested, to enable a further set of three alternate carrier assemblies to be lowered for capturing further sticks.

Since alternate gripper assemblies are lowered in the capture region 6 it will be seen that the pitch of suspended ice-cream bars just after the capture region 6, and prior to opening out of the concertinaed carrier chain 12, is half of the pitch of bars as supplied on the supply plate 5.

Once the gripper assemblies have proceeded leftwards in Figures 1 to 3 of the sprocket 23, the links of the carrier chain 12 are free to open out and will do so dependent upon the available chain slack which at any one moment depends upon the accumulation of carrier chain links after the sprocket, which depends upon the state of the intermittent drive of drive chain 20.

The speed of the continuous drive to sprockets 21, 22 is sufficient to open out all concertinaed links of the carrier chain 12 as the carrier chain 12 approaches the release region 10. Accordingly the pairs of gripper bars 8, 9 are urged apart, as in Figure 9.

A suitable cam track is provided in the region just prior to sprocket 21 for urging the bars 8 and 9 in opposite directions transversely of the path of chain 12 in order to bring the bars 8 and 9 into register, as in Figure 10. It will be appreciated that once the bars 8 and 9 are in register, 8 lines of suspended ice-cream bars have been created, in readiness for the grippers to be released in release region 10.

## Claims

1. A conveying apparatus (4) arranged to reposition articles (1) whilst the articles (1) are held by a plurality of gripping means (7), the gripping means being re-arrangeable in relative position so as to reduce the number of lines of articles (1) being conveyed, characterised in that the gripping means (7) comprise an elongate gripper assembly formed by parallel first and second elongate gripper carriers (8, 9), the first gripper carrier (8) carrying a first set of grippers (7) longitudinally spaced-apart along the first gripper carrier, and the second gripper carrier similarly carrying a second set of longitudinally spaced-apart grippers (7), the spacing of the grippers of the first set corresponding to the spacing of the grippers of the second set, the arrangement being such that the first and second gripper carriers are relatively movable from an out-of-phase adjacent condition.

2. A conveying apparatus as claimed in claim 1 characterised in that the gripper carriers (8, 9) are adjacent to each other in said adjacent condition with the gripper means (7) of the first set alternating out-of-phase longitudinally with the gripper means (7) of the second set and being substantially in line therewith, whereas in the separated condition of the gripper carriers (8, 9) the first set of gripper means (7) are substantially longitudinally in register (in-phase) with the second set of gripper means (7) but with the first and second sets displaced from each other in a direction transverse to the longitudinal direction of the gripper carrier (8, 9).

3. A conveying apparatus as claimed in claims 1 or 2 characterised in that the first and second gripper carriers (8, 9) are arranged for movement apart and adjacent to each other, in the direction transverse to the longitudinal direction of each gripper carrier (8, 9), by the contraction and extension of a carrier chain (12), wherein adjacent links of the carrier chain (12) respectively carry the first and second gripper carriers (8, 9) and are arranged to concertina together at times and to open out at other times.

4. A conveying apparatus as claimed in claim 3 characterised in that the carrier chain (12) carries a series of pairs of said gripper assemblies, and the carrier chain (12) is preferably arranged to execute a loop so as to extend from an article capture region (6) to an article release region (10).

5. A conveying apparatus as claimed in claim 4 characterised in that it is provided with drive means (20-22) for the carrier chain (4), operable whereby the carrier chain (12) links are concertinaed together in the article capture region (6), such that pairs of first and second gripper carriers (8, 9) are in their adjacent condition during capture of the articles (1) by the associated grippers (7) in said article capture region, and such that the carrier chain links are opened out in the article release region (10), whereby the pairs of gripper carriers (8, 9) are in their separated condition during release of the articles by the associated grippers in the article release region.

6. A conveying apparatus as claimed in claim 5 characterised in that the drive means (20-22) for the carrier chain (12) comprise a first, intermittent drive means (20) which is arranged intermittently to drive the carrier chain through the article capture region (6), and a second, continuous drive means (21, 22) arranged continuously to drive the carrier chain (12) through the article release region (10).

7. Conveying apparatus as claimed in any one of claims 1 to 6 characterised in that it is for use with stick-mounted confectionery to be supplied to the conveying apparatus in a substantially horizontal orientation, the apparatus (4) being provided with a pick-up assembly associated with the product capture region (6), the pick-up assembly comprising a plurality of pick-up devices (13) adapted to be rotated down to grip a stick (2) of a substantially horizontal article (1), and then to lift the stick (2) whilst rotating the stick to a substantially vertical orientation for presentation to one of said grippers (7) to capture the stick (2).

8. A conveying apparatus as claimed in claim 7 characterised in that it is provided with an array of said pick-up devices (13) mounted on a structure (not shown) movable to advance in synchronism with a plate (5) on which an array of articles (1) is supplied to the conveying apparatus (4), downward rotation of the pick-up devices (13) being arranged to take place during the advancement.

9. A conveying apparatus as claimed in claim 8 characterised in that it is operable whereby advancement of the plates (5) and structure is arrested whilst the grippers (7) capture the sticks (2).
